# EUROPEAN PATENT APPLICATION

(11) **EP 1 521 462 A2**
(43) Date of publication of application: **06.04.2005**
(21) Application number: 04256114.2
(22) Date of filing: 02.10.2004
(51) Int. Cl.: H04N 5/92, H04N 5/93

(54) **Information storage medium with AV data including non-multiplexed streams recorded thereon, and method of and apparatus for reproducing the same**

(30) Priority: 04.10.2003 KR 2003069022; 14.09.2004 KR 2004073373
(71) Applicant: SAMSUNG ELECTRONICS CO. LTD., Suwon-city, Kyungki-do (KR)
(72) Inventor: Jung, Kil-soo, 104-1401 Namsuwon Doosan Apt., Hwaseong-gun, Gyeonggi-do (KR); Ko, Jung-wan, Suwon-si, Gyeonggi-do (KR); Park, Sung-wook, Mapo-gu, Seoul (KR)
(74) Representative: Robinson, Ian Michael

(57) **Abstract**

A method, medium, and apparatus for separately generating and reproducing non-multiplexed interactive graphics, audio, and/or sub-picture streams independent of a multiplexed main stream. The medium with audio-video (AV) data recorded thereon includes at least: multiplexed AV data and non-multiplexed interactive graphics, audio, and/or sub-picture streams. Accordingly, it is possible to support more audio and/or sub-picture and interactive graphics streams without being limited by a multiplexing bit-rate, provide continuous reproduction, and improve video image quality.

## Description

This application claims the priority benefit of Korean Patent Application Nos. 2003-69022, filed on October 4, 2003 and 2004-73373, filed on September 14, 2004, in the Korean Intellectual Property Office.

The present invention relates to reproducing audio-video data, and more particularly, to a method, apparatus, and information storage medium for storing non-multiplexed interactive graphics and audio and/or sub-picture streams separately from a multiplexed main stream, and an apparatus for and method of reproducing the information storage medium.

Audio-video (AV) data includes video data, audio data, sub-picture data, and interactive graphics data. This data is transported or stored as a transport stream or a program stream after they are formed into packets of predetermined sizes. Alternatively, they may be formed into separate streams in a non-multiplexed state. When they are multiplexed, one multiplexed bit stream includes a plurality of audio streams and sub-picture streams corresponding to a video stream. The number of audio streams and sub-picture streams are determined according to a multiplexing bit-rate.

Presently, the maximum multiplexing bit-rate in digital versatile discs (DVDs) is 10.08 Mbps, with the maximum bit-rate of the video stream taking up, among the 10.08 Mbps, 9.8 Mbps for MPEG-2 video (1.856 Mbps for MPEG-1 video). Therefore, the remaining 0.28 Mbps are used for multiplexing the plurality of audio and sub-picture streams. In the case of DVDs, a maximum of 8 audio streams and 32 sub-picture streams may be multiplexed. However, the image quality becomes degraded because the multiplexing bit-rate allocated to video has to be decreased in order to multiplex a plurality of audio and sub-picture streams according to a predetermined multiplexing bit-rate. Therefore, the number of streams provided by the DVD standard (i.e., 8 audio streams and 32 sub-picture streams) cannot realistically be multiplexed while maintaining high quality. Rather, only 2-3 audio streams and 4-5 sub-picture streams are typically multiplexed.

According to the present invention there is provided an apparatus and method as set forth in the appended claims. Preferred features of the invention will be apparent from the dependent claims, and the description which follows.

The present invention provides an information storage medium with non-multiplexed audio and/or sub-picture streams recorded thereon to provide a maximum number of audio and/or sub-picture streams while maintaining high quality video at a predetermined multiplexing bit-rate, and an apparatus for and a method of reproducing the same.

The present invention also provides an information storage medium on which a non-multiplexed interactive graphics stream is recorded separately from a multiplexed main stream, and an apparatus for and a method of reproducing the same.

Additional aspects and/or advantages of the invention will be set forth in part in the description which follows and, in part, will be obvious from the description, or may be learned by practice of the invention.

To achieve the above and/or other aspects and advantages, embodiments of the present invention include an information storage medium with AV (audio-video) data, the information storage medium including multiplexed AV data, and a non-multiplexed audio stream and/or a non-multiplexed sub-picture stream.

In addition, each of the non-multiplexed audio stream and/or sub-picture stream may include synchronizing information for synchronizing with video data corresponding to the multiplexed AV data. Further, each of the non-multiplexed audio stream and/or sub-picture stream may be reproduced by referring to synchronizing information for synchronizing with video data corresponding to the multiplexed AV data.

The information storage medium may include a non-multiplexed interactive graphics stream, as well as existence information indicating whether the non-multiplexed audio stream, sub-picture stream, and/or a non-multiplexed interactive graphics is included in the information storage medium.

To achieve the above and/or other aspects and advantages, embodiments of the present invention include a method of storing AV data, including recording non-multiplexed audio, sub-picture, and/or interactive graphics streams, and recording multiplexed audio, sub-picture, and/or interactive graphics streams separately from the non-multiplexed audio, sub-picture, and/or interactive graphics streams.

To achieve the above and/or other aspects and advantages, embodiments of the present invention include an method of reproducing AV data, including reading non-multiplexed interactive graphics, audio, and/or sub-picture streams and multiplexed interactive graphics, audio, and/or sub-picture streams, and storing the non-multiplexed interactive graphics, audio, and/or sub-picture streams in a local storage, demultiplexing the multiplexed interactive graphics, audio, and/or sub-picture streams, and selecting between the multiplexed and non-multiplexed audio, sub-picture, and/or interactive graphics streams, respectively, according to a choice of a user, and decoding the selected streams, with the decoding of the selected streams occurring after the storing of the non-multiplexed streams in the local storage.

The method may further include receiving existence information regarding whether the non-multiplexed interactive graphics stream and audio and/or sub-picture streams exist before the reading of the non-multiplexed and multiplexed interactive graphics and audio and/or sub-picture streams. In addition, it may be determined whether to delete data of the local storage, with the local storage storing the non-multiplexed interactive graphics and audio and/or sub-picture streams after the decoding of the selected streams.

Further, the reading of the non-multiplexed interactive graphics, audio, and/or sub-picture streams may include downloading AV data from a network, and wherein the multiplexed interactive graphics, audio, and/or sub-picture streams are recorded on a medium and the non-multiplexed interactive graphics, audio, and/or sub-picture streams are not stored on the medium.

To achieve the above and/or other aspects and advantages, embodiments of the present invention include an apparatus for reproducing AV data, including a reader to read AV data, a local storage to store read non-multiplexed audio, sub-picture, and or interactive graphics streams, from among the read AV data, a data processing unit to store read multiplexed AV data, from among the read AV data, and demultiplexes the multiplexed AV data, a controller to select the non-multiplexed audio, sub-picture, and/or interactive graphics streams or demultiplexed audio, sub-picture, and/or interactive graphics streams, output from the data processing unit, a switch to output the selected audio, sub-picture, and/or interactive graphics streams in response to a control signal received from the controller, and a decoding unit that decodes and outputs the sub-picture, audio, video, and interactive graphics streams output from the switch.

In addition, the non-multiplexed interactive graphics, audio, and/or sub-picture streams may be stored in the local storage by pre-loading at an initial access of an information storage medium when the information storage medium is inserted into the reproducing apparatus. A local storage manager may control deletion and storage of data stored in the local storage. Further, the data processing unit may include a first buffer to buffer the non-multiplexed interactive graphics, audio, and/or sub-picture streams, a second buffer to buffer the multiplexed AV stream, and a demultiplexer to demultiplex the buffered multiplexed AV stream.

The controller may control a switch to select between the multiplexed and non-multiplexed interactive graphics, audio, and/or sub-picture streams, respectively, by a user or a program, and control the decoding unit so that the selected stream can be reproduced in synchronization with the multiplexed AV using synchronizing information included in or referred to by the audio, sub-picture and/or interactive graphics streams.

To achieve the above and/or other aspects and advantages, embodiments of the present invention include a computer readable medium comprising computer readable code for performing a method of storing AV data, the method including recording non-multiplexed interactive graphics, audio, and/or sub-picture streams, and recording multiplexed interactive graphics, audio, and/or sub-picture streams separately from the non-multiplexed interactive graphics, audio, and/or sub-picture streams.

To achieve the above and/or other aspects and advantages, embodiments of the present invention include a computer readable medium comprising computer readable code for performing a method of reproducing AV data, the method including reading non-multiplexed interactive graphics, audio, and/or sub-picture streams, and multiplexed interactive graphics, audio, and/or sub-picture streams, and storing the non-multiplexed interactive graphics, audio, and/or sub-picture streams in a local storage, demultiplexing the multiplexed interactive graphics, audio, and/or sub-picture streams, and selecting between the multiplexed and non-multiplexed interactive graphics, audio, and/or sub-picture streams, respectively, according to a choice of a user, and decoding the selected streams, with the decoding of the selected streams occurring after the storing of the non-multiplexed streams in the local storage.

To achieve the above and/or other aspects and advantages, embodiments of the present invention include a method of storing AV data, including recording non-multiplexed audio, sub-picture, and/or interactive graphics streams, and recording multiplexed video and audio, sub-picture, and/or interactive graphics streams, such that the non-multiplexed audio, sub-picture, and/or interactive graphics streams are decodable with the multiplexed video in synchronism and independent of a multiplexing bit rate for the recorded multiplexed video and audio, sub-picture, and/or interactive graphics streams.

To achieve the above and/or other aspects and advantages, embodiments of the present invention include a method of reproducing AV data, including reading non-multiplexed interactive graphics, audio, and/or sub-picture streams and multiplexed video and interactive graphics, audio, and/or sub-picture streams, demultiplexing the multiplexed video and interactive graphics, audio, and/or sub-picture streams, selecting between the demultiplexed and non-multiplexed audio, sub-picture, and/or interactive graphics streams, respectively, and decoding the selected streams and the demultiplexed video, wherein the non-multiplexed audio, sub-picture, and/or interactive graphics streams are decodable with the demultiplexed video in synchronism and independent of a multiplexing bit rate for the recorded multiplexed video and audio, sub-picture, and/or interactive graphics streams.

To achieve the above and/or other aspects and advantages, embodiments of the present invention include an information storage medium with AV (audio-video) data, the information storage medium including multiplexed AV data, and a non-multiplexed audio stream and/or a non-multiplexed sub-picture stream, wherein the non-multiplexed audio and/or sub-picture streams are decodable with a multiplexed video, of the multiplexed AV data, in synchronism and independent of a multiplexing bit rate for the multiplexed AV data.

To achieve the above and/or other aspects and advantages, embodiments of the present invention include an apparatus for reproducing AV data, including a reader to read AV data, a data processing unit to demultiplex multiplexed AV data, from the read AV data, a controller to select non-multiplexed audio, sub-picture, and/or interactive graphics streams, read from the AV data, or demultiplexed video and audio, sub-picture, and/or interactive graphics streams output from the data processing unit, a switch to output the selected audio, sub-picture, and/or interactive graphics streams in response to a control signal received from the controller, and a decoding unit to decode and output the demultiplexed video and sub-picture stream, audio stream, video stream, and interactive graphics stream output from the switch, wherein the non-multiplexed audio, sub-picture, and/or interactive graphics streams are decodable with the demultiplexed video in synchronism and independent of a multiplexing bit rate for the multiplexed AV data.

These and/or other aspects and advantages of the invention will become apparent and more readily appreciated from the following description of the embodiments, taken in conjunction with the accompanying drawings of which:
Figure 1 is a block diagram explaining a reproduction of a non-multiplexed audio stream, a sub-picture stream, and an interactive graphics stream, according to an embodiment of the present invention;
Figure 2 is a block diagram of an audio-video (AV) data recording/reproducing apparatus, according to an embodiment of the present invention; and
Figure 3 is a flow chart for reproducing AV data, according to another embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

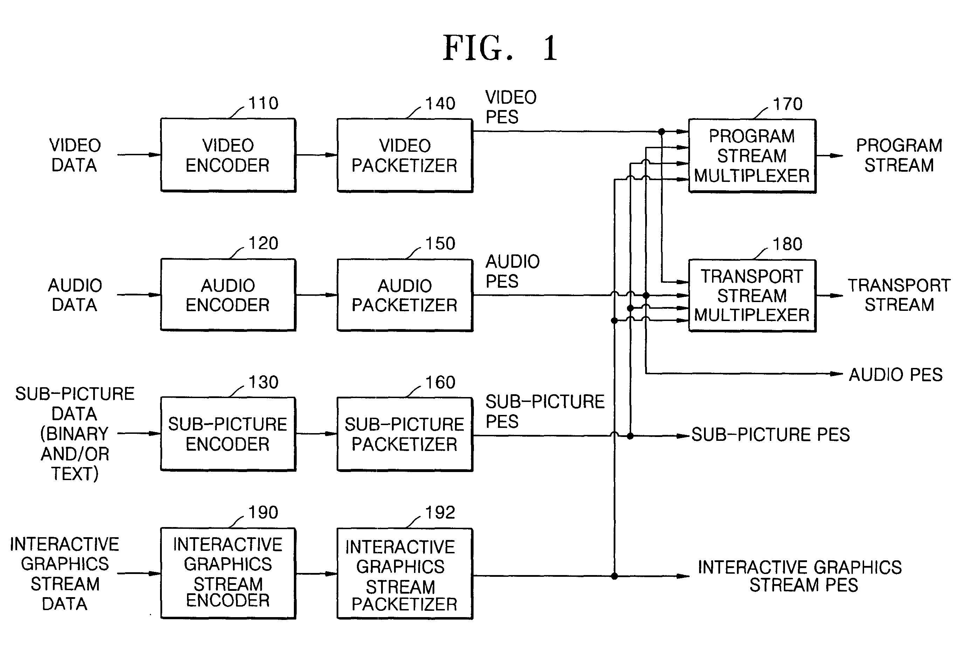

Figure 1 is a block diagram explaining the reproduction of a non-multiplexed audio stream, a sub-picture stream, and an interactive graphics stream, according to an embodiment of the present invention. Referring to Figure 1, portions of the audio stream, the sub-picture stream, or the interactive graphics stream can be multiplexed together with a video stream, and portions of the audio stream and the sub-picture stream can be stored separately in an information storage medium without being multiplexed.

Since the amount of audio-video (AV) data is large, the AV data is recorded after being compressed in the time and space domains. One available compression method is the widely used moving picture experts group (MPEG) encoding method, which was set by the International Organization for Standardization (ISO)/ International Electrotechnical Commission (IEC) Joint Standard Committee. Audio data that is encoded with video data may also be compressed using the encoding method set by MPEG. Digital data that is not compressed, such as linear pulse code modulation (PCM) data, may be used as it is. Sub-picture data can be a collection of data composed of a plurality of lines, with run-length encoding being performed for each line.

For text-based sub-pictures, the amount of data is much less than for bitmap-based sub-pictures. Thus, the text-based sub-pictures can be stored in a file without encoding. Time information to which the encoded data must be synchronized is further added to the encoded sub-picture data and is system multiplexed according to the MPEG-2 encoding method or is formed into a separate stream or file without being multiplexed with the video data.

The interactive graphics stream is used to configure menus, and may exist separately from the video stream. The interactive graphics stream is used to provide a menu having, for example, buttons to permit a user to interact with the information storage medium.

The non-multiplexed audio stream, the sub-picture stream, and the interactive graphics stream together with the video stream do not have any relation to the multiplexing bit-rate. Therefore, there is no limit to the number of the audio or sub-picture streams or the size of the interactive graphics stream if the capacity of the information storage medium is extremely large, for example.

Digitalized video, audio, sub-picture, and interactive graphics stream data are respectively input to a video encoder 110, an audio encoder 120, a sub-picture encoder 130, and an interactive graphics stream encoder 190, and encoded. Then, the encoded video, audio, sub-picture, and interactive graphics stream data are respectively transmitted to a video packetizer 140, an audio packetizer 150, a sub-picture packetizer 160, and an interactive graphics stream packetizer 192, to be packetized into predetermined size packets. The video packetizer 140, the audio packetizer 150, the sub-picture packetizer 160, and the interactive graphics stream packetizer 192 convert the input data into video, audio, sub-picture, and interactive graphics stream packetized elementary stream (PES) packets, respectively. The video, audio, sub-picture, and interactive graphics stream PES packets are input to a program stream multiplexer 170 or a transport stream multiplexer 180. That is, video, audio, sub-picture, and/or interactive graphics stream PES packets are transmitted to the program stream multiplexer 170 and converted into a program stream, or the transport stream multiplexer 180 and converted into a transport stream. A portion of the audio and sub-picture PES packets, and the interactive graphics stream may not be multiplexed, but are output and are stored in the information storage medium.

That is, according to an embodiment of the present invention, the information storage medium stores the multiplexed program and transport streams, as well as a plurality of audio and/or sub-picture streams and interactive graphics streams that are not multiplexed. The plurality of audio and/or sub-picture streams and interactive graphics streams that are not multiplexed may not be recorded onto the information storage medium but can be stored in, for example, a server via a network and are reproducible by downloading the non-multiplexed streams. In this case, the network should be stable.

In addition, according to another embodiment of the present invention, when the information storage medium stores audio and/or sub-picture streams and an interactive graphics stream separate from a main stream, such as a program stream or a transport stream, a reproducing apparatus must be informed of this fact. To do so, the information storage medium further stores information that indicates the existence of a stream, independent of the main stream. This existence information may include the number of audio and/or sub-picture streams, and interactive graphics streams, included in the information storage medium (if stored on the information storage medium), information about the location of a corresponding stream, and information about the size of data.

Furthermore, the existence information, which indicates whether the stream independent of the main stream exists, may be included in an index table, which is one type of system data that grants a user to connect in title units. That is, the existence information may be recorded in a field within the index table. The title, which is classified by the index table, is a logical reproducing group a user can recognize. There is no information that is generally shared between different titles. Therefore, including the existence information of the additional stream in title units within the index table, a stream used in a corresponding title can be read to a local storage whenever the title is changed. In another method of recording the existence information, the existence information may be provided in a file separate from the index table.

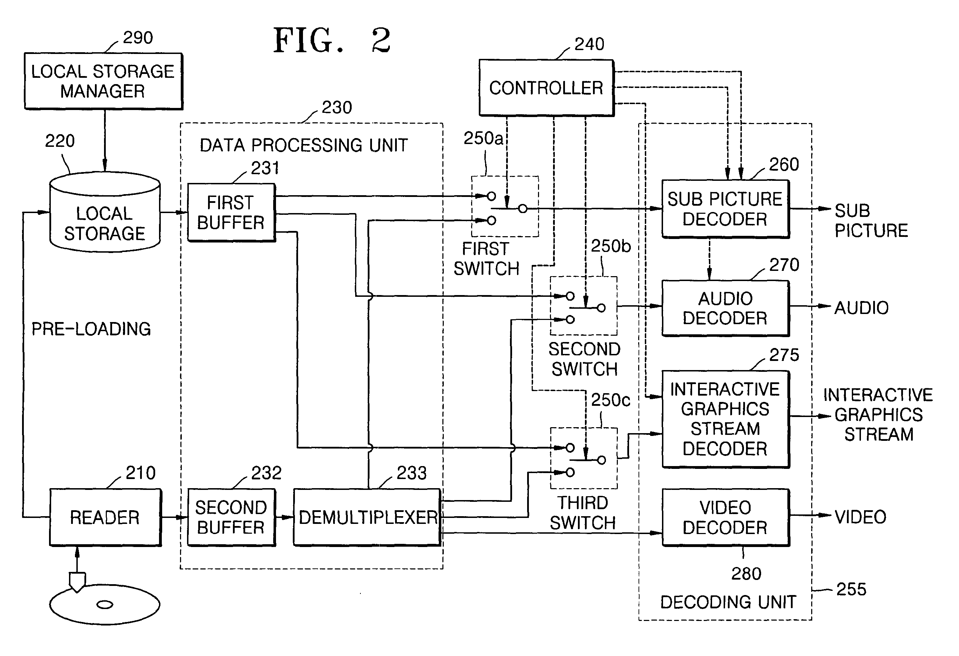

Figure 2 is a block diagram of an AV data recording/reproducing apparatus, according to an embodiment of the present invention. The AV data recording/reproducing apparatus includes at least a reader 210, a local storage 220, a data processing unit 230, a controller 240, a first switch 250a, a second switch 250b, a third switch 250c, a decoding unit 255, and a local storage manager 290. Additional elements may be included for the recording of AV data to the information storage medium, for example, implementation of which is apparent from the present disclosure. The data processing unit 230 includes a first buffer 213, a second buffer 232, and a demultiplexer 233. The decoding unit 255 includes a sub-picture decoder 260, an audio decoder 270, an interactive graphics stream decoder 275, and a video decoder 280.

The reader 210 reads multiplexed AV data and non-multiplexed audio and/or sub-picture streams and an interactive graphics stream, and transmits them to the local storage 220 or the data processing unit 230. The non-multiplexed audio and/or sub-picture streams and interactive graphics stream may also be downloaded via a network.

Referring to Figure 2, the non-multiplexed audio and/or sub-picture and interactive graphics streams read via an information storage medium, or the network, are stored in the local storage 220. In order to reproduce video seamlessly, the non-multiplexed audio and/or sub-picture and the interactive graphics streams must be preloaded. That is, when the information storage medium is inserted into the AV recording/reproducing apparatus, the non-multiplexed audio and/or sub-picture and interactive graphics streams are stored in the local storage 220 in advance, e.g., by pre-loading during the initial access of the information storage medium. The storing of the non-multiplexed audio and/or sub-picture and interactive graphics streams in the local storage 220 can be completed before a moving picture is reproduced.

The local storage 220 is where the non-multiplexed audio and/or sub-picture and interactive graphics streams are stored, among data recorded in the information storage medium. As such, providing a separate storage space for data that is not multiplexed may prevent frequent jumping of an optical pickup, for an information storage medium, when reproducing a moving picture file. That is, when reproducing a moving picture file with data that is not multiplexed, continuous reproduction of the moving picture file is guaranteed by reading multiplexed data and data that is not multiplexed via separate channels. The local storage 220 is a re-writable storage medium, and may be a hard disk, a re-writable optical disk, or a flash memory, for example.

The local storage manager 290 manages the data stored in the local storage 220. The local storage manager 290 deletes the data stored in the local storage 220 having a fixed storage capacity according to a predetermined deleting condition, stores the data in another storage medium, and so on. That is, the local storage manager 290 performs functions such as managing data deletion (e.g., deleting data stored in the local storage 220 at the moment when the information storage medium is ejected from the reproducing apparatus or deleting the data after receiving a command from a user via a user interface (not shown)) or managing a file system of data stored in the local storage 220.

That is, if the recording/reproducing apparatus receives information indicating that a non-multiplexed stream independent of a main stream exists, the non-multiplexed stream is read via the reader 210 and transmitted to the local storage 220. Then, the reproduction of the non-multiplexed stream starts at the data processing unit 230 and the decoding unit 255. When the information storage medium is ejected from the reproducing apparatus by the user after the reproduction is completed, the local storage manager 290 performs the following operations according to the characteristics of the local storage 220.

If the local storage 220 is a volatile memory, every non-multiplexed stream stored in the local storage 220 can be deleted when the information storage medium is ejected from the reproducing apparatus.

If the local storage 220 is a non-volatile memory, the local storage manager 290 may allow the user to select whether to separately store the data stored in the local storage 220, via the user interface. Then, data that is to be deleted is deleted, and data that is to be stored is stored in a virtual file system within the local storage 200 or stored with an intrinsic identifier corresponding to the information storage medium as a root directory within the local storage 200 via another file system, according to the selection of the user.

Also, if an additional stream included in a new information storage medium cannot be stored because of the data being stored in the above-mentioned method, the local storage manger 290 allows the user to delete data stored in the local storage 220 via the user interface. Alternatively, a new additional stream may be stored by deleting old files according to a predetermined rule such as deleting data that is stored for longer than a predetermined amount of time.

The first buffer 231 buffers the non-multiplexed audio and/or sub-picture and interactive graphics streams. The second buffer 232 buffers a multiplexed AV stream read from the information storage medium, and transmits the multiplexed AV stream to the demultiplexer 233. The demultiplexer 233 divides the multiplexed AV stream into video, audio, sub-picture, and interactive graphics streams. The video, audio, sub-picture, and interactive graphics streams are respectively transmitted to the video, audio, sub-picture, and interactive graphics stream decoders 280, 270, 260, and 275 to be decoded. The controller 240 controls the first, second, and third switches 250a, 250b, 250c to select among the multiplexed and non-multiplexed audio and/or sub-picture and interactive graphics streams, as selected by a user or a program. In addition, the controller 240 controls the sub-picture decoder 260, the audio decoder 270, and the interactive graphics stream decoder 275 so that the audio and/or sub-picture and interactive graphics streams can be reproduced in synchronization with the video data using synchronizing information included in or referred to by the audio and/or sub-picture and interactive graphics streams.

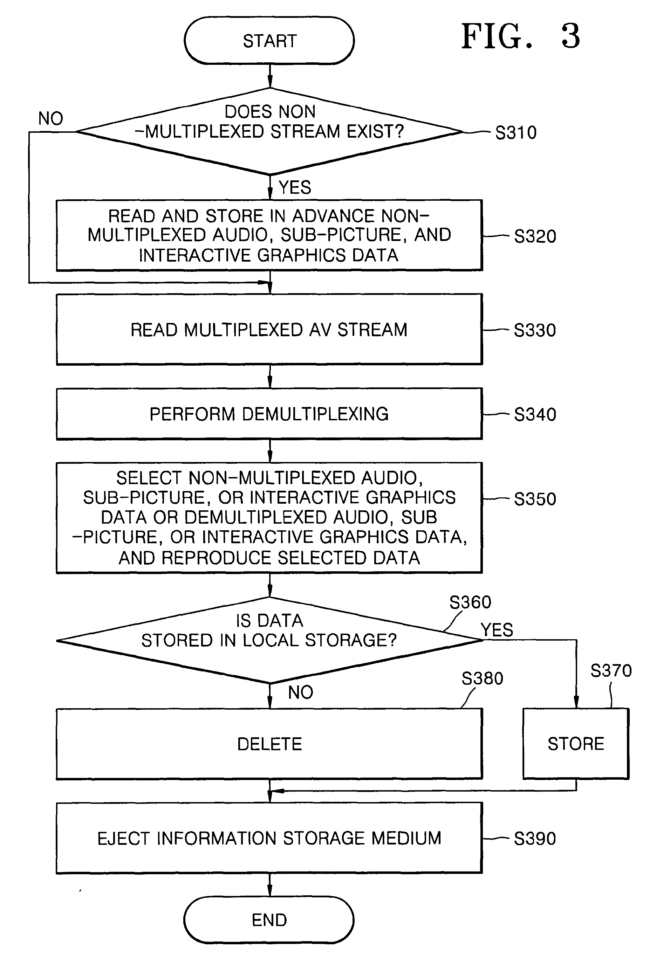

Figure 3 is a flow chart illustrating a method of reproducing AV data, according to an embodiment of the present invention. When the information storage medium is inserted into the reproducing apparatus, it is determined whether non-multiplexed audio and/or sub-picture streams or an interactive graphics stream exists (Operation S310). If existence information, indicating that non-multiplexed audio and/or sub-picture streams or an interactive graphics stream exists, is read, the non-multiplexed audio and/or sub-picture and interactive graphics streams are read and stored in local storage 220 in advance of the demultiplexing of corresponding multiplexed AV stream data (Operation S320). An AV stream that is multiplexed is then read (Operation S330). The multiplexed audio and/or sub-picture and interactive graphics steams are demultiplexed and divided into the audio stream, the sub-picture stream, and the interactive picture stream (Operation S340). Afterwards, one of the non-multiplexed audio, sub-picture, or interactive graphics stream and the de-multiplexed audio, sub-picture, or interactive graphics stream are selected and decoded (Operation S350).

After the reproduction is completed, it is determined whether data read and stored in the local storage 220 is to be stored in another storage location (Operation S360). The data is stored in the other storage location, within the local storage 220, if a storage command is received (Operation S370), and deleted if the storage command is not received (Operation S380). Then, the information storage medium can be ejected from the reproducing apparatus (Operation S390).

As described above, a method, medium, and apparatus for reproducing AV data has the following exemplary benefits. First, it is possible to support more audio and/or sub-picture streams and an interactive graphics stream without being limited by a multiplexing bit-rate. Second, it is possible to operate the apparatus for reproducing AV data without connecting to a network since non-multiplexed audio and/or sub-picture and interactive graphics streams are stored in an information storage medium. Third, a high quality moving picture can be provided by allocating a higher bit-rate to a video stream since fewer audio and/or sub-picture and interactive graphics streams are stored in a corresponding multiplexed bit stream. Lastly, continuous reproduction of a moving picture via a local storage is guaranteed by having two reading channels.

Embodiments of the present invention can also be embodied as computer readable code on a computer readable medium. The computer readable medium can be any data storage device that can store or transmit data which can be thereafter read by a computer system. Examples of the computer readable media include read-only memory (ROM), random-access memory (RAM), CD-ROMs, magnetic tapes, floppy disks, optical data storage devices, wave guides, and carrier waves (such as data transmission through the Internet or wireless networks, for example). The computer readable medium can also be distributed over network coupled computer systems so that the computer readable code can be stored/transmitted and executed in a distributed fashion.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An information storage medium with audio-video AV data, the information storage medium comprising:
multiplexed AV data; and
a non-multiplexed audio stream and/or a non-multiplexed sub-picture stream.

2. The information storage medium of claim 1, wherein each of the non-multiplexed audio stream and/or sub-picture stream comprises synchronizing information for synchronizing with video data corresponding to the multiplexed AV data.

3. The information storage medium of claim 1 or 2, wherein each of the non-multiplexed audio stream and/or sub-picture stream is reproduced by referring to synchronizing information for synchronizing with video data corresponding to the multiplexed AV data.

4. The information storage medium of claim 1, 2 or 3, further comprising a non-multiplexed interactive graphics stream.

5. The information storage medium of any preceding claim, further comprising existence information indicating whether the non-multiplexed audio stream, sub-picture stream, and/or a non-multiplexed interactive graphics is included in the information storage medium.

6. The information storage medium of any preceding claim, wherein the information storage medium has capacity for greater than 8 different audio streams and/or 32 different sub-picture streams.

7. A method of storing AV data, comprising:
recording non-multiplexed audio, sub-picture, and/or interactive graphics streams; and
recording multiplexed audio, sub-picture, and/or interactive graphics streams separately from the non-multiplexed audio, sub-picture, and/or interactive graphics streams.

8. The method of claim 7, wherein the non-multiplexed audio and/or sub-picture streams include multiple respective audio and/or sub-picture streams.

9. A method of reproducing AV data, comprising:
reading non-multiplexed interactive graphics, audio, and/or sub-picture streams and multiplexed interactive graphics, audio, and/or sub-picture streams, and storing the non-multiplexed interactive graphics, audio, and/or sub-picture streams in a local storage (220);
demultiplexing the multiplexed interactive graphics, audio, and/or sub-picture streams; and
selecting between the multiplexed and non-multiplexed audio, sub-picture, and/or interactive graphics streams, respectively, according to a choice of a user, and decoding the selected streams, with the decoding of the selected streams occurring after the storing of the non-multiplexed streams in the local storage (220).

10. The method of claim 9, further comprising receiving existence information regarding whether the non-multiplexed interactive graphics stream and audio and/or sub-picture streams exist before the reading of the non-multiplexed and multiplexed interactive graphics and audio and/or sub-picture streams.

11. The method of claim 9 or 10, further comprising determining whether to delete data of the local storage (220), with the local storage (220) storing the non-multiplexed interactive graphics and audio and/or sub-picture streams after the decoding of the selected streams.

12. The method of claim 9, 10 or 11, where the reading of the non-multiplexed interactive graphics, audio, and/or sub-picture streams comprises downloading AV data from a network, and wherein the multiplexed interactive graphics, audio, and/or sub-picture streams are recorded on a medium and the non-multiplexed interactive graphics, audio, and/or sub-picture streams are not stored on the medium.

13. The method of claim 12, wherein the medium is a recording medium complying with a DVD specification.

14. An apparatus for reproducing AV data, comprising:
a reader (210) to read AV data;
a local storage (220) to store read non-multiplexed audio, sub-picture, and or interactive graphics streams, from among the read AV data;
a data processing unit (230) to store read multiplexed AV data, from among the read AV data, and demultiplexes the multiplexed AV data;
a controller (240) to select the non-multiplexed audio, sub-picture, and/or interactive graphics streams or demultiplexed audio, sub-picture, and/or interactive graphics streams, output from the data processing unit (230);
a switch (250) to output the selected audio, sub-picture, and/or interactive graphics streams in response to a control signal received from the controller (240); and
a decoding unit (255) that decodes and outputs the sub-picture, audio, video, and interactive graphics streams output from the switch (250).

15. The apparatus of claim 14, wherein the non-multiplexed interactive graphics, audio, and/or sub-picture streams are stored in the local storage (220) by pre-loading at an initial access of an information storage medium when the information storage medium is inserted into the reproducing apparatus.

16. The apparatus of claim 14 or 15, further comprising a local storage manager (290) that controls deletion and storage of data stored in the local storage (220) .

17. The apparatus of claim 16, wherein the local storage manager (290) controls the local storage (220) so that the data is deleted when the information storage medium is ejected from the reproducing apparatus.

18. The apparatus of claim 16 or 17, wherein the local storage manager (290) asks a user whether to continue to store data in the local storage (220) through a user interface, receives a selection from the user, and controls the local storage (220) to delete or store data according to the selection of the user.

19. The apparatus of any of claims 14 to 18, wherein the data processing unit (230) comprises:
a first buffer (231) to buffer the non-multiplexed interactive graphics, audio, and/or sub-picture streams;
a second buffer (232) to buffer the multiplexed AV stream; and
a demultiplexer (233) to demultiplex the buffered multiplexed AV stream.

20. The apparatus of any of claims 14 to 19, wherein the controller (240) controls a switch (250) to select between the multiplexed and non-multiplexed interactive graphics, audio, and/or sub-picture streams, respectively, by a user or a program, and controls the decoding unit (255) so that the selected stream can be reproduced in synchronization with the multiplexed AV using synchronizing information included in or referred to by the audio, sub-picture and/or interactive graphics streams.

21. The apparatus of any of claims 14 to 20, where the reading of AV data comprises reading the non-multiplexed interactive graphics, audio, and/or sub-picture streams by downloading AV data from a network, and wherein the multiplexed interactive graphics, audio, and/or sub-picture streams are recorded on a medium and the non-multiplexed interactive graphics, audio, and/or sub-picture streams are not stored on the medium.

22. The apparatus of claim 21, wherein the medium is a recording medium complying with a DVD specification.

23. A computer readable medium comprising computer readable code for performing a method of storing AV data, the method comprising:
recording non-multiplexed interactive graphics, audio, and/or sub-picture streams; and
recording multiplexed interactive graphics, audio, and/or sub-picture streams separately from the non-multiplexed interactive graphics, audio, and/or sub-picture streams.

24. A computer readable medium comprising computer readable code for performing a method of reproducing AV data, the method comprising:
reading non-multiplexed interactive graphics, audio, and/or sub-picture streams, and multiplexed interactive graphics, audio, and/or sub-picture streams, and storing the non-multiplexed interactive graphics, audio, and/or sub-picture streams in a local storage (220);
demultiplexing the multiplexed interactive graphics, audio, and/or sub-picture streams; and
selecting between the multiplexed and non-multiplexed interactive graphics, audio, and/or sub-picture streams, respectively, according to a choice of a user, and decoding the selected streams, with the decoding of the selected streams occurring after the storing of the non-multiplexed streams in the local storage (220).

25. A method of storing AV data, comprising:
recording non-multiplexed audio, sub-picture, and/or interactive graphics streams; and
recording multiplexed video and audio, sub-picture, and/or interactive graphics streams, such that the non-multiplexed audio, sub-picture, and/or interactive graphics streams are decodable with the multiplexed video in synchronism and independent of a multiplexing bit rate for the recorded multiplexed video and audio, sub-picture, and/or interactive graphics streams.

26. A method of reproducing AV data, comprising:
reading non-multiplexed interactive graphics, audio, and/or sub-picture streams and multiplexed video and interactive graphics, audio, and/or sub-picture streams;
demultiplexing the multiplexed video and interactive graphics, audio, and/or sub-picture streams;
selecting between the demultiplexed and non-multiplexed audio, sub-picture, and/or interactive graphics streams, respectively; and
decoding the selected streams and the demultiplexed video, wherein the non-multiplexed audio, sub-picture, and/or interactive graphics streams are decodable with the demultiplexed video in synchronism and independent of a multiplexing bit rate for the recorded multiplexed video and audio, sub-picture, and/or interactive graphics streams.

27. An information storage medium with AV (audio-video) data, the information storage medium comprising:
multiplexed AV data; and
a non-multiplexed audio stream and/or a non-multiplexed sub-picture stream, wherein the non-multiplexed audio and/or sub-picture streams are decodable with a multiplexed video, of the multiplexed AV data, in synchronism and independent of a multiplexing bit rate for the multiplexed AV data.

28. An apparatus for reproducing AV data, comprising:
a reader (210) to read AV data;
a data processing unit (230) to demultiplex multiplexed AV data, from the read AV data;
a controller (240) to select non-multiplexed audio, sub-picture, and/or interactive graphics streams, read from the AV data, or demultiplexed video and audio, sub-picture, and/or interactive graphics streams output from the data processing unit (230);
a switch (250) to output the selected audio, sub-picture, and/or interactive graphics streams in response to a control signal received from the controller (240); and
a decoding unit (255) to decode and output the demultiplexed video and sub-picture stream, audio stream, video stream, and interactive graphics stream output from the switch (250), wherein the non-multiplexed audio, sub-picture, and/or interactive graphics streams are decodable with the demultiplexed video in synchronism and independent of a multiplexing bit rate for the multiplexed AV data.
